# EUROPEAN PATENT SPECIFICATION

(11) **EP 4 664 315 B1**
(45) Date of publication and mention of the grant of the patent: **09.12.2026**
(21) Application number: 25182327.4
(22) Date of filing: 12.06.2025
(51) Int. Cl.: G06F 16/25, G06F 3/06, G06F 16/901

(54) **HYBRID TIERED STORAGE FOR CLOUD PLATFORMS**
HYBRIDER GESTUFTER SPEICHER FÜR CLOUD-PLATTFORMEN
STOCKAGE ÉTAGÉ HYBRIDE POUR PLATES-FORMES EN NUAGE

(30) Priority: 13.06.2024 US 202418742848
(43) Date of publication of application: 17.12.2025
(73) Proprietor: Microsoft Technology Licensing, LLC, Redmond, WA 98052 (US)
(72) Inventor: Sood, Armaan, Redmond, WA, 98052 (US); Detjen, Sam, Redmond, WA, 98052 (US); Siqueira de Souza, Rodrigo, Redmond, WA, 98052 (US); Kodavalla, Hanumantha R., Redmond, WA, 98052 (US); Sundaram, Krishnan, Redmond, WA, 98052 (US); Sundar, Hari Sudan, Redmond, WA, 98052 (US); Kolla, Sreekanth, Redmond, WA, 98052 (US); Hass, Tamara, Redmond, WA, 98052 (US)
(74) Representative: Grünecker Patent- und Rechtsanwälte PartG mbB

(56) References cited:
- DONG SIYING ET AL: "RocksDB: Evolution of Development Priorities in a Key-value Store Serving Large-scale Applications", ACM TRANSACTIONS ON STORAGE, vol. 17, no. 4, 30 November 2021 (2021-11-30), US, pages 1 - 32, XP093203741, ISSN: 1553-3077
- XU PENG XP04193@163 COM ET AL: "Building a Fast and Efficient LSM-tree Store by Integrating Local Storage with Cloud Storage", ACM TRANSACTIONS ON ARCHITECTURE AND CODE OPTIMIZATION, ASSOCIATION FOR COMPUTING MACHINERY, US, vol. 19, no. 3, 25 May 2022 (2022-05-25), pages 1 - 26, XP058787004, ISSN: 1544-3566, DOI: 10.1145/3527452
- ANONYMOUS: "Autoscaling Guidance - Azure Architecture Center | Microsoft Learn", 16 December 2022 (2022-12-16), pages 1 - 9, XP093323543, Retrieved from the Internet <URL:https://learn.microsoft.com/en-us/azure/architecture/best-practices/auto-scaling> [retrieved on 20251008]

## Description

### BACKGROUND

Cloud providers offer, among other services, globally distributed, horizontally partitioned, multi-model database services. Some services are designed to allow customers to elastically scale throughput along with the storage across several geographical regions while offering guaranteed low latency, high availability, predictable throughput, and multiple well-defined consistency models. A few cloud-based database services also offer comprehensive Service Level Agreements (SLAs) encompassing dimensions such as throughput, latency at the 99th percentile, availability, and consistency. However, the different architectures such as 'Shared nothing' or 'Serverless' architectures implemented by many of the database services on the cloud platforms tend to be inelastic which can result in non-optimal use of system resources.
DONG SIYING ET AL: "RocksDB: Evolution of Development Priorities in a Key-value Store Serving Large-scale Applications", ACM TRANSACTIONS ON STORAGE, vol. 17, no. 4, 30 November 2021 (2021-11-30), pages 1-32 relates to an eight-year retrospective on development priorities for RocksDB, a key-value store developed at Facebook that targets large-scale distributed systems and that is optimized for Solid State Drives (SSDs). It describes how the priorities evolved over time as a result of hardware trends and extensive experiences running RocksDB at scale in production at a number of organizations: from optimizing write amplification, to space amplification, to CPU utilization. It describes lessons from running large-scale applications, including that resource allocation needs to be managed across different RocksDB instances, that data formats need to remain backward- and forward-compatible to allow incremental software rollouts, and that appropriate support for database replication and backups are needed. Lessons from failure handling teaches that data corruption errors needed to be detected earlier and that data integrity protection mechanisms are needed at every layer of the system. It describes improvements to the key-value interface. It describes a number of efforts that in retrospect proved to be misguided. Finally, it describes a number of open problems that could benefit from future research.
XU PENG XP04193@163 COM ET AL: "Building a Fast and Efficient LSM- tree Store by Integrating Local Storage with Cloud Storage", ACM TRANSACTIONS ON ARCHITECTURE AND CODE OPTIMIZATION, ASSOCIATION FOR COMPUTING MACHINERY, US, vol. 19, no. 3, 25 May 2022 (2022-05-25), pages 1-26 discloses RocksMash, a fast and efficient LSM store that uses local storage to store frequently accessed data and metadata while using cloud to hold the rest of the data to achieve cost-effectiveness. To improve metadata space-efficiency and read performance, RocksMash uses an LSM- aware persistent cache that stores metadata in a space-efficient way and stores popular data blocks by using compaction-aware layouts. Moreover, RocksMash uses an extended write-ahead log for fast parallel data recovery. RocksMash is implemented by embedding these designs into RocksDB. The evaluation results show that RocksMash improves the performance by up to 1.7x compared to the state-of-the-art schemes and delivers high reliability, cost-effectiveness, and fast recovery.
Anonymous: "Autoscaling Guidance - Azure Architecture Center | Microsoft Learn", 16 December 2022 (2022-12-16), pages 1-9 relates to autoscaling which is the process of dynamically allocating resources to match performance requirements. As the volume of work grows, an application might need more resources to maintain the desired performance levels and satisfy service-level agreements (SLAs). As demand slackens and the extra resources are no longer needed, they can be deallocated to minimize costs. Autoscaling takes advantage of the elasticity of cloud-hosted environments while easing management overhead. It reduces the need for an operator to continually monitor the performance of a system and make decisions about adding or removing resources.

### SUMMARY

It is the object of the present invention to improve the flexibility of resource management in database systems.
This object is solved by the subject matter of the independent claims.
Preferred embodiments are defined in the dependent claims.

According to embodiments of the present disclosure, various methods, apparatus, and products for implementing a tiered data storage scheme are described herein. In some aspects, implementing a tiered data storage scheme includes: storing, as cold data in a disaggregated storage medium, immutable segments from Virtual Machines (VMs), wherein the immutable segments include documents from partitions that are characterized by corresponding partition keys; formatting the cold data into sorted runs, wherein a sorted run includes at least one of the immutable segments that is arranged in non-overlapping search key ranges and wherein search keys correspond to the documents and a search key of a document includes corresponding partition key and a documentID of the document; assigning the sorted runs to corresponding levels of multiple levels based on timestamps of the sorted runs; and generating metadata maps that store metadata identifying the immutable segments and the sorted runs including the immutable segments. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Features of the present disclosure are illustrated by way of examples shown in the following figures. In the following figures, like numerals indicate like elements, in which:
FIG. 1A shows a block diagram of a cloud platform implementing a tiered data storage scheme in accordance with an embodiment of the present disclosure.
FIG. 1B shows a resource management apparatus in the cloud platform shown in FIG. 1A, in accordance with an embodiment of the present disclosure.
FIG. 2A shows block diagrams of segments, formatted in accordance with embodiments of the present disclosure.
FIG. 2B shows a flowchart of a method of formatting received data in accordance with embodiments of the present disclosure.
FIG. 2C shows a flowchart of a method of storing data in the cold tier of the cloud platform in accordance with embodiments of the present disclosure.
FIG. 3A shows a flowchart of a method for processing a search request for a document in multiple tiers in accordance with embodiments of the present disclosure.
FIG. 3B shows a flowchart of a method for searching the cold tier in accordance with the embodiments of the present disclosure.
FIG. 4A shows a block diagram of the disaggregated storage medium in accordance with embodiments of the present disclosure.
FIG. 4B shows flowcharts of methods enabled by de-coupling the compute resources from storage as implemented by the cloud platform including a tiered storage in accordance with embodiments of the present disclosure.

### DETAILED DESCRIPTION

For simplicity and illustrative purposes, the principles of the present disclosure are described by referring mainly to embodiments and examples thereof. In the following description, numerous specific details are set forth in order to provide an understanding of the embodiments and examples. It will be apparent, however, to one of ordinary skill in the art, that the embodiments and examples may be practiced without limitation to these specific details. In some instances, well-known methods and/or structures have not been described in detail so as not to unnecessarily obscure the description of the embodiments and examples. Furthermore, the embodiments and examples may be used together in various combinations.

Throughout the present disclosure, the terms "a" and "an" are intended to denote at least one of a particular element. As used herein, the term "includes" means includes but not limited to, the term "including" means including but not limited to.

An architecture that is widely in use in the database systems of cloud environments is the shared-nothing architecture, which requires storage and computing resources to be scaled together. Often, the entire data in a database of a cloud platform is not regularly accessed. However, in a shared-nothing architecture, the unused data continues to be stored in data structures built for high-availability (HA) conditions that fulfill stringent performance requirements. While the users may require large data storage to store data that is constantly being generated by the various devices, high availability of all the data thus generated is neither necessary nor desired. This is because, for the users, high availability translates into higher costs for data storage, while for the cloud providers, the data storage uses computational hardware resources that are better employed for other mission-critical applications. However, users may require at least a portion of the data to be accessible under HA conditions. Furthermore, the portion of data to be made available under HA conditions may differ from time to time. Many of these challenges can be addressed if the storage and computational resources can be scaled independently so that the computational resources can be flexibly assigned as required over a specified amount of data.

Disclosed herein is a 'shared-nothing, shared disc' based tiered storage system for cloud platforms which makes available a portion of the data that is frequently accessed as 'hot data' that fulfills conditions for HA while another portion of the data that is less frequently accessed is stored as 'cold data'. A resource management apparatus on the cloud platform includes a processor and memory storing processor-executable instructions as a request receiver, a data retriever, and a compute optimizer that enable implementation of the tiered storage. The hot data is stored in a local storage medium of a virtual machine (VM) on the cloud platform and the cold data is stored in a disaggregated storage medium that is shared by the VMs on the cloud platform. The VM receives data from a partition that is identified by a partition key. A local data manager within the VM stores the data including documents received from the partition to the local storage medium and in an in-memory table (memtable).

The memtable is an in-memory data structure that can have a fixed, predetermined maximum size and is used to store a copy of the hot data as a segment. When the memtable in a local storage medium attains the maximum size with the addition of the documents, the local data manager generates an immutable segment from the memtable and stores or flushes the immutable segment to the disaggregated storage medium. After the segment is flushed to the disaggregated storage, the memtable is deallocated by the local data manager, which continues to store the hot data in the local storage medium until certain criteria, e.g., time-to-cold (TTC criteria) are met. TTC criteria can include but are not limited to, temporal criterion, e.g., data is stored for a predetermined time, access criterion, e.g., data is accessed within a preceding predetermined time interval, or a combination of different criteria. When a memtable satisfies the TTC, the local data manager deletes the memtable from the local storage medium of the VM.

In an example, the local data manager formats the segment as a .avro file. The local data manager generates an index for a segment that includes a range of search keys (*sk*) associated with the various documents stored therein. Each document of the segment is identified uniquely by a search key, which is a combination of the partition key identifying the partition from which the document was received and a documentID. The disaggregated storage manager groups segments in the disaggregated storage medium into sorted runs based on consecutive corresponding partition keys or non-overlapping search key ranges in an ascending or descending search key order. Furthermore, the disaggregated storage manager assigns levels to the sorted runs based on time stamps so that newly formed sorted runs are placed in higher levels. The disaggregated storage manager generates metadata maps for storing metadata of the segments and sorted runs, which enables identification of the segments for search or other purposes.

The resource management apparatus includes a document retriever that enables the retrieval of documents based on a received search key. If the search key includes the partition key and the documentID, the document retriever can retrieve the document so identified. If, however, the search key does not include a documentID, then documents from the partition identified by the partition key are retrieved. If the search key includes only a documentID, then documents across partitions having the documentID can be retrieved. The documents are identified based on the metadata of the segments and the sorted runs stored in the metadata maps. The management apparatus also includes a compute optimizer that enables scaling up or scaling down Request Units (RUs) per user requirements. An RU is a unit of compute or performance currency abstracting the system resources such as the Central Processing Unit (CPU), Input/Output Operations Per Second (IOPS), and memory that are required to perform database operations on a cloud computing platform. Whether the database operation is a write, point read, or query, operations are measured in RUs. By way of illustration and not limitation, a point read (fetching a single item by its ID and partition key value) for a 1-KB item can be one Request Unit (or one RU), regardless of the Application Programming Interface (API) used to interact with the database.

When a request to scale up compute or Request Units (RUs) is received for a portion of storage in the disaggregated storage medium, the RUs in terms of additional VMs are instantiated, and the metadata including the addresses of the segments in the portion of the storage medium is passed to the newly instantiated VM. Therefore, the VM gains a 'view' of the portion of the disaggregated storage medium so that point reads, or document retrieval is enabled. Conversely, if a request to scale down the compute resources is received for a portion of the storage in the disaggregated storage medium, the VM(s) corresponding to the segments in the portion of the storage is deleted.

The tiered storage for cloud platforms disclosed herein enables a hybrid shared-nothing/shared-disk LSM-tree-based storage architecture. The resource management apparatus executes the various processes via backend components and stores data in the disaggregated storage medium, for example, in an open-source file format (.avro). The disclosed resource management apparatus and processes leverage the distributed nature of LSM trees to provide for a technical improvement enabling scaling up or scaling down resources as needed without movement of data. Since segments are clustered by partition keys and therefore, physical partitions can be scaled up and down easily by being given a partition key range logical view. Thus a view of immutable segments in the disclosed tiered storage scheme provides for greater elasticity as opposed to other architectures such as B-trees, where each compute instance may access fragmented pages of the mutable B-tree file which would require locking. Another technical improvement afforded by the disclosed tiered storage is that it is elastic enough to be scaled across the shared-nothing/shared-disc by user workloads. For example, if customers require high performance and availability for 100% of data, the customer can stay on a 100% shared-nothing architecture with the data being stored on the local storage only without being flushed to the disaggregated storage medium. If 100% performance is required only for 10% of data (hot data) and of data while resource efficiency/scalability, is preferred for the remaining 90% of the data then the service can switch to a hybrid shared-nothing/shared-disk architecture (tiered storage). If a customer prefers a serverless model where resources are assigned only when required, a 100% shared-disk architecture can be implemented so that the resource management apparatus can efficiently instantiate additional VMs without any data movement (serverless). Thus, the tiered storage scheme disclosed herein based on "shared-nothing, shared disc" architecture provides for a technical improvement over existing architectures in enabling more efficient or optimized use of computational resources as such resources can be instantiated as needed. The computational resources need not be assigned in advance as required by shared-nothing architecture nor do the computational resources have to be made completely inaccessible as in the serverless architecture.

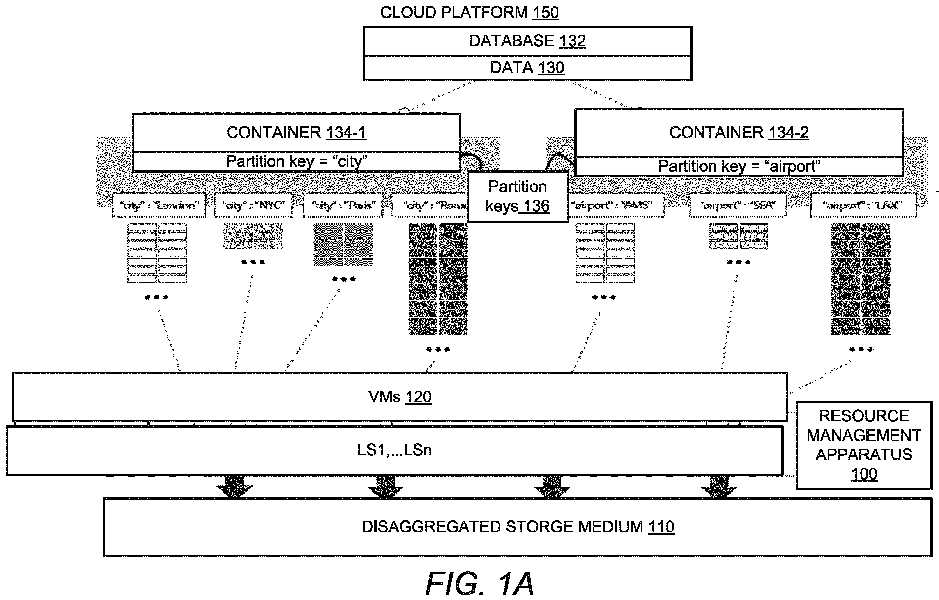

FIG. 1A shows a block diagram of a cloud platform 150 implementing a tiered data storage scheme in accordance with an embodiment of the present disclosure. The cloud platform 150 receives data 130 from external data sources, e.g., database 132. By way of illustration and not limitation, a brief description of the external data sources is provided herein. In an example, the external data sources can be NoSQL data sources. The database 132 is logically partitioned into a number of containers or partitions 134-1 and 134-2 identified by corresponding partition keys 136 (PKs).

For example, as shown in FIG. 1A, the container 134-1 is characterized by partition key "city" while the container 134-2 is characterized by partition key "airport". The data 130 associated with different values of a particular partition key is transmitted to different VMs of a plurality of VMs on the cloud platform 150. A resource management apparatus 100 (hereafter referred to as 'the apparatus 100") is also included in the cloud platform 150. Each of the plurality of VMs also includes a corresponding local storage LS1, .., LSn, (n is a natural number and n = 1, 2, 3,... ). A disaggregated storage medium 110 is shared by the plurality of VMs 120. The apparatus 100 implements a two-tiered data storage scheme for the clients of the cloud platform 150 based on the hybrid "shared nothing - shared disk" architecture. The "shared nothing - shared disk" architecture enables the apparatus 100 to store the data 130 as hot data on the hot tier including the local storage media e.g., LS1,...,LSn corresponding to a plurality of VMs 120 and as cold data on the cold tier that includes the disaggregated storage medium 110 as further detailed herein.

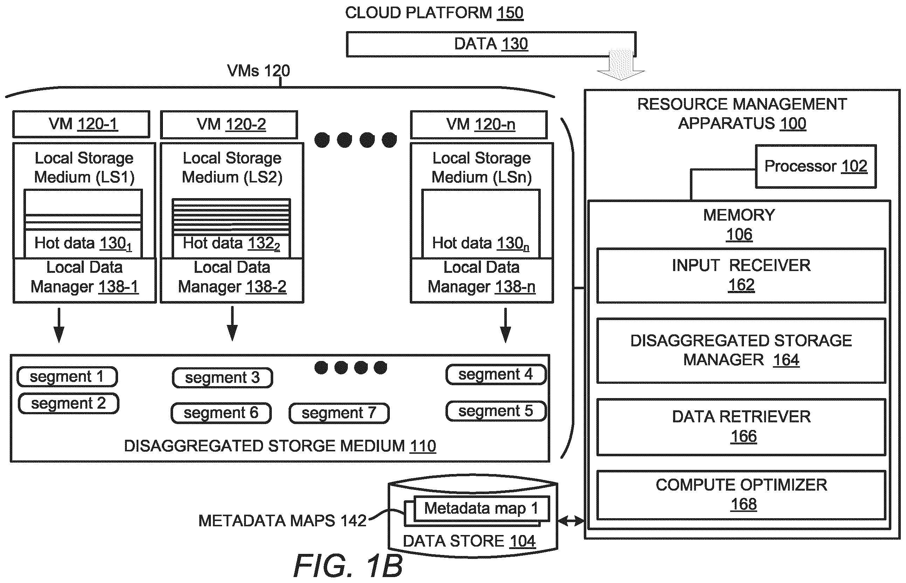

FIG. 1B shows the cloud platform 150 with the resource management apparatus 100 shown in FIG. 1A, in accordance with an embodiment of the present disclosure. The apparatus 100 includes a processor 102 coupled to a data store 104 and a memory 106 that stores modules with programming instructions to implement the tiered storage scheme disclosed herein. The memory 106 includes an input receiver 162 that executes background processes to collect data 130 to be stored in the two tiers, a 'hot tier' and a 'cold tier' of the cloud platform 150. The memory 106 further includes a disaggregated storage manager 164 that manages 'hot data' and 'cold data' in the hot and cold tiers. A data retriever 166 enables retrieval of records or documents from one or more of the local storages and the disaggregated storage medium 110 and a compute optimizer 168 instantiates new VMs or deletes existing VMs as needed for processing the cold data in the disaggregated storage medium 110. The various operations and processes executed by the different components of the cloud platform 150 to enable resource-efficient two-tiered storage will be described herein.

Each of the plurality of virtual machines (VMs) 120, e.g., VM 120-1, VM 120-2, ...VM 120-n, hosted on the cloud platform 150 is associated with a corresponding local storage. LS1 is the local storage corresponding to VM 120-1, LS2 is the local storage of VM 120-2, etc. In an example, the local storage of a VM can include a solid state drive (SSD) of a computer that accesses the particular VM. The local storage of a given VM, e.g., LS1 of VM 120-1 is configured to store the data corresponding to the partition key(s). For example, if LS1 is the local storage for partition key, city = "London" and the data 130 includes an update to London data then the disaggregated storage manager 164 stores the data 130 in LS1. However, it may be noted that the data corresponding to a particular partition key is not split across the local storage media. For example, LS1 stores the entire data for partition keys "London" and "NYC" so that this data is not stored in any other local storage media. The hot data 130₁ in the local storage medium, e.g., LS1, is deleted when preconfigured threshold criteria or condition(s) (Time to Cold (TTC)) are met. Each of the plurality of VMs 120 also includes a corresponding local data manager 138-1,138-2, ...138-n.

A local data manager, e.g., local data manager 138-1, formats the data to be stored to the disaggregated storage medium 110 into immutable "segments". An immutable segment is a file of a defined size (e.g., threshold size) including documents from the same or different partitions which once sealed cannot be changed. While the functions of the local data manager are described below with reference to the local data manager 138-1, it can be understood that such description is equally applicable to other local data managers 138-2, ...,138-n, unless otherwise specified. The local storage media LS1, LS2,..., and LSn, write their documents into immutable segments. When a segment is full, the local data manager 138-1 seals the segment and stores a copy of the sealed segment in the disaggregated storage medium 110. For example, the hot data 130₁ in LS1 shows a partially filled segment, hot data 130₂ in LS2 shows a filled segment that can be sealed while hot data 130ₙ in LSn shows an empty segment. The different segments 1-7 shown in the disaggregated storage medium 110 are filled segments that were flushed from one or more of the local storage media LS1, LS2,..., LSn. The disaggregated storage manager 164 maintains one or more metadata maps 142 for identifying segments in the disaggregated storage medium 110 for query processing or other purposes as detailed herein. In an example, the disaggregated storage medium 110, which may be referred to as a single entity, includes a network of multiple storage devices that store data configured into a specific format by the apparatus 100.

Under the tiered storage scheme, access to hot data 130₁ stored on LS1 fulfills certain Service Level Agreement (SLA) criteria which may specify terms such as high availability (HA), etc., while the access to cold data on disaggregated storage medium 110 does not fulfill the certain SLA. Therefore, the apparatus 100 assigns computing resources, (e.g., Request Units (RUs)) to the local storage of the plurality of VMs 120. When TTC expires, the local data manager 138-1 deletes the hot data 130₁ of VM 120-1 from LS1 while cold data remains on the disaggregated storage medium 110. TTC can be set based on user requirements and criteria. TTC can be defined in terms of one or more criteria such as, but not limited to, temporal criteria, frequency and/or recency of access, etc.

In different examples, the apparatus 100 is a computing device, such as a server, a laptop computer, a desktop computer, a tablet computer, and/or the like. In some examples, the servers are part of a cloud infrastructure, a virtual machine in the cloud infrastructure, a computing device of an Information technology (IT) professional of the cloud infrastructure, a computing device of an IT professional contracted by the service provider of the cloud infrastructure, etc.

With respect to FIGs. 1A and 1B, the processor 102 is a semiconductor-based microprocessor, a central processing unit (CPU), an application-specific integrated circuit (ASIC), a field-programmable gate array (FPGA), and/or other hardware device. The memory 106 may also be termed a computer-readable medium and is, for example, a Random Access memory (RAM), an Electrically Erasable Programmable Read-Only Memory (EEPROM), a storage device, or the like. In some examples, the memory 106, is a non-transitory computer-readable storage medium, where the term "non-transitory" does not encompass transitory propagating signals. In any regard, the memory 106, has stored thereon machine-readable instructions executable respectively by processor 102. Similarly, each of the data store 104 may also be a Random Access memory (RAM), an Electrically Erasable Programmable Read-Only Memory (EEPROM), a storage device, or the like.

Although the apparatus 100 is depicted as having a single processor, it should be understood that the apparatus 100 may include additional processors and/or cores without departing from the scope of apparatus 100. In this regard, references to a single processor 102, as well as to a single memory 106, may be understood to additionally or alternatively pertain to multiple processors 102 and/or multiple memories 106. In addition, or alternatively, the processor 102 and the memory 106 may be integrated into a single component, e.g., an integrated circuit on which both the processor 102 and the memory 106 may be provided. In addition, or alternatively, the operations described herein as being performed by the processor 102 can be distributed across multiple corresponding apparatuses 100 and/or multiple processors 102.

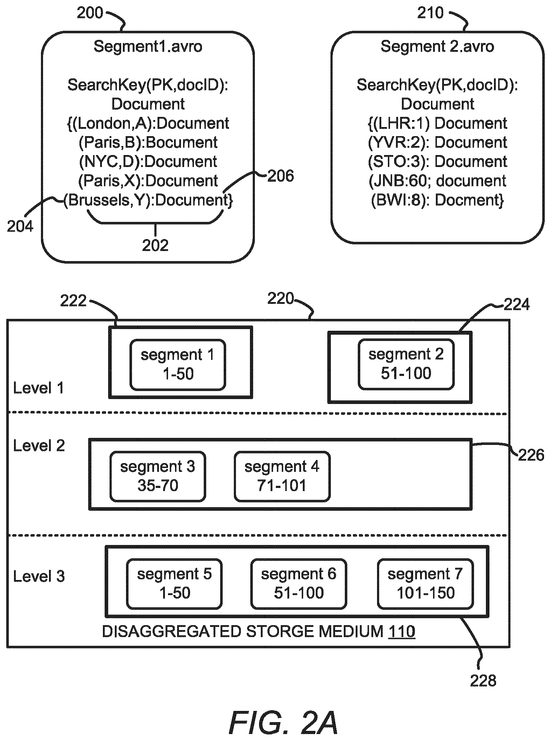

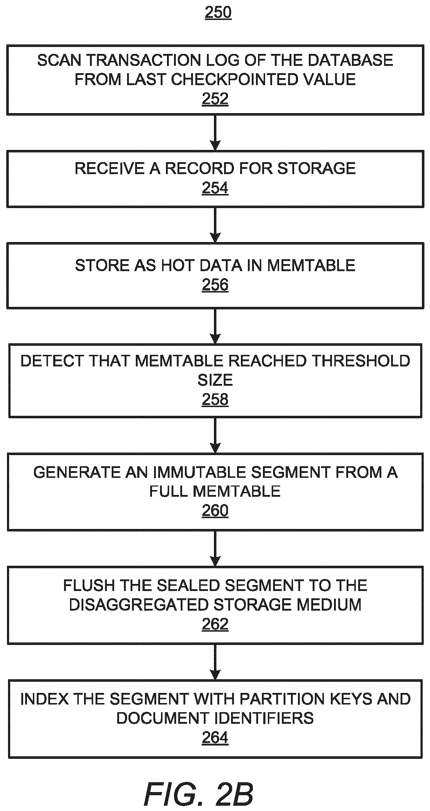

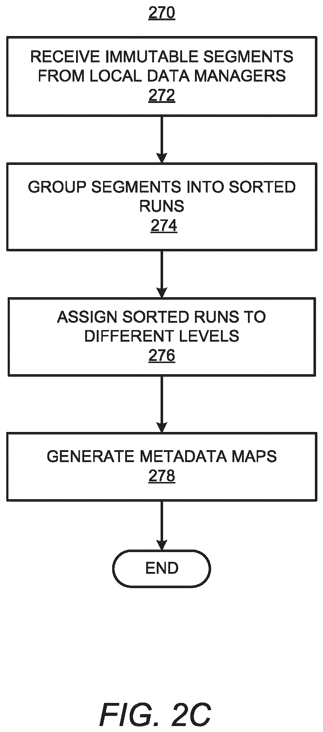

FIG. 2A shows block diagrams 200 and 210 of two segments, formatted in accordance with embodiments of the present disclosure and FIGs. 2B and 2C show flowcharts of respective methods 250 and 270 of formatting the received data 130 for storage to the cold tier in accordance with embodiments of the present disclosure. The methods 250 and 270 of FIGs. 2B and 2C will be described with reference to the block diagrams of FIG. 2A.

In some examples, the tiered storage is based on distributed Log-structured merge trees (LSM trees) that handle both write and read operations efficiently with in-memory and disk-based storage structures. The LSM tree is distributed across physical partitions, e.g., the local storage media LS1, LS2, ..., LSn, and hence can be viewed as n separate LSM trees where n is the number of physical partitions. Data 130 including records from the database 132 is ingested into the disaggregated storage medium 110 from a background task via memtables or in-memory maps sorted by a SearchKey <PK, userDocID>. When a memtable in one of the local storage media LS1, LS2, ..., LSn, reaches the threshold size, the corresponding local data manager flushes the memtable to the disaggregated storage medium 110 as a segment, e.g., segment1.

The data collection and formatting process begins at 252 with the input receiver 162 scanning the transaction log of the database 132 from the last checkpointed value for updates to any of the records associated with the partition keys corresponding to the local storage media LS1,...LSn. At 254, a VM, e.g., VM1 receives a record including an update to a document associated with the corresponding partition key. The local data manager 138-1 stores the record at 256 as hot data 130₁ to the local storage LS1 as part of a memtable or segment. The record is identified with metadata that includes a search key, which is a combination of the partition key and documentID. It is noted that each of the partitions, e.g., local storage medium LS1, LS2, etc., has multiple documents and hence a number of documents can share the same partition key while each of the documents is identified by a documentID, which is unique within the partition but two documents in different partitions can have the same documentID and hence a combination of partition key and documentID uniquely identifies the document across partitions and is designated as the search key. Besides the metadata, the record in the memtable also includes the document. For example, a record 202 includes a search key 204 along with the document 206 identified by the search key 204. Since the memtable is in a local storage medium of a VM and the local storage medium only stores data for a particular partition key, data associated with the particular partition key is stored in the memtable.

When a sufficient number of records is stored in the memtable, the local data manager 138-1 detects that the memtable has reached a threshold size at 258 and seals the memtable to generate an immutable segment at 260. In some examples, a segment is an immutable .avro file of fixed size. At 262, the local data manager 138-1 seals the filled-up segment and flushes the filled-up segment to the disaggregated storage medium 110 to be stored as part of cold data. For example, Segment1.avro 200 stores records having different values for partition key = "City". Similarly, Segment2.avro 210 stores records having different values for partition key = "Airport". It may be appreciated that flushing of segments to the disaggregated storage medium 110 is, in some examples, independent of the occurrence of the TTC and depends only on the memtables reaching the threshold size so that the memtables that reach the threshold size continue to be stored as hot data until the TTC criteria are attained. Also, the local data manager 138-1 indexes the segments with the corresponding metadata including the partition key and documentIDs at 264. The metadata of the segment includes without limitation, a Log Sequence Number (LSN), an identifier assigned to a record or document, and corresponding metadata in the segment, segment ID, file IDs, bloom filter, segment size, number of tombstones, search key range, etc.

FIG. 2C shows a flowchart of a method 270 of storing data to a cold tier as implemented by the disaggregated storage manager 164 in accordance with an embodiment of the present disclosure. At 272, the immutable segments generated and flushed by the various local data managers 138-1, 138-2,..,138-n, are received in the disaggregated storage medium 110. At 274, the disaggregated storage manager 164 groups segments into sorted runs, e.g. 222, 224, 226, and 228, based on non-overlapping search key ranges and are arranged in an ascending or descending search key order. For example, as shown at 220, segment 3 includes a search key range 30-70 while segment 4 includes a search key range of 71-101. Since each segment is also ordered by a search key, a sorted run can only contain exactly one copy of a search key.

At 276, the disaggregated storage manager 164 also assigns levels to the sorted runs by creating the corresponding metadata. For example, level 1, level 2, and level 3 are shown at 220. Each level can have one or more sorted runs, e.g., level 1 has two sorted runs 222 and 224 with one segment each while level 2 has a sorted run 226 with two segments, and level 3 has a sorted run of three segments. Levels are logical metadata concepts and a level is assigned based on the timestamps associated with the segments in the sorted runs with newer sorted runs stored in upper levels. A large amount of data is on the lower levels so a larger number of levels results in greater compaction. Segment compaction enables simplification of the search for documents in the disaggregated storage medium 110, de-duplication of the records, and updating of the segments corresponding to the updates to the database 132 such as but not limited to edits and deletion of records, etc. The disaggregated storage manager 164 assigns levels to the sorted runs by generating two maps of metadata at 276. One metadata map, maps levels to the corresponding list of sorted runs, and another metadata map maps sorted runs to a list of segments in the sorted run.

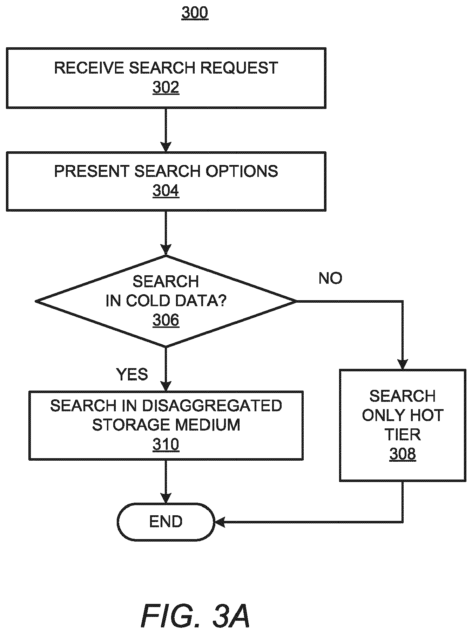

FIG. 3A shows a flowchart of a method 300 for processing a search request for a record/document in two tiers as implemented by the data retriever 166 in accordance with embodiments of the present disclosure. At 302, the processor 102 executing instructions in the data retriever 166 receives a search key of a document to be retrieved. As mentioned above, a search key is formed from a combination of the partition key and the documentID. Hence, one or more of the partition keys and documentID can be provided as the search key and the search request produces results based on the completeness of the search key. If the complete search key is provided, the data retriever 166 provides a document uniquely identified by the combination of the partition key and the document ID as a search result. If only the partition key is provided, the data retriever 166 retrieves the documents associated with the partition key from the corresponding segment(s). Also, if no partition key is included in the search key, and only a documentID is provided, the data retriever 166 retrieves the various documents identified by the documentID across different partitions.

When the data retriever 166 receives a search request at 302, the data retriever 166 provides various search options at 304 such as whether the search should be conducted only in the hot tier or if the cold tier should also be searched. For example, the data retriever 166 provides a selectable control, e.g., an option button/checkbox at 304 which can be selected if the user wants to search the cold tier also. At 306, the data retriever 166 determines if the cold tier should also be searched based on the selected option. If the user does not select the control, the data retriever 166 searches only the hot tier, e.g., the hot data in the local data storage of the VM issuing the search request at 308. If the cold data option is selected, the data retriever 166 also searches the cold tier, i.e., the disaggregated storage medium 110 at 310.

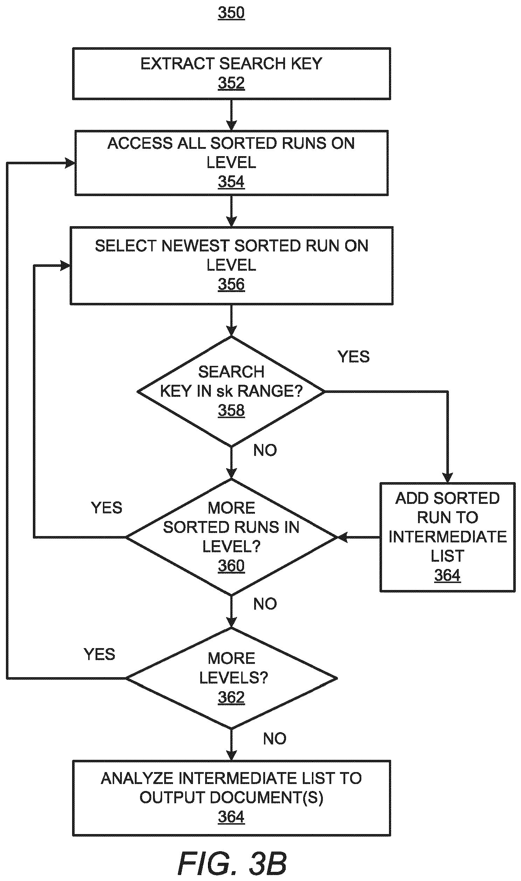

FIG. 3B shows a flowchart of a method 350 for searching the cold tier implemented by the data retriever 166 in accordance with an embodiment of the present disclosure. When the search request with an indication to search the cold data is received, the process begins at 352 with the processor 102 executing instructions in the data retriever 166 to extract the search key of a document to be retrieved, for example, via textual processing of the search request. At 354, the data retriever 166 accesses all the sorted runs on the top-most level, e.g., L0. At 356, the data retriever 166 selects the newest sorted run, e.g., the sorted run with the latest time stamp among all the sorted runs on the accessed level. At 358, the data retriever 166 determines if the received search key is within the search key range of the selected sorted run. If the search key is not within the search key range of the selected sorted run, the data retriever 166 determines at 360 if further sorted runs are to be processed in the accessed level. If the search key is within the search key range of the selected sorted run, the data retriever 166 adds the sorted run to an intermediate list at 364.

The data retriever 166 further determines at 360 if more sorted runs remain for processing at the accessed level. If yes, the data retriever 166 selects the next sorted run on the accessed level at 356, else, the data retriever 166 determines if further levels remain for processing at 362. If the data retriever 166 determines that no further levels remain for processing, the data retriever 166 analyzes the intermediate list contents based on the extracted search key at 364 to retrieve the requested document. If the data retriever 166 determines at 362 that further levels remain to be searched, the data retriever 166 returns to 354 to access the sorted runs in the next level, e.g., L1. When analyzing the sorted runs in the intermediate list for the search key at 366, the data retriever 166 uses segment metadata such as the bloom filter which is a probabilistic data structure that is based on hashing and is typically used to add elements to a set or test if an element is in a set. The bloom filter output is used to determine if the search key might be present in the segment. If the requested document is present in the segment, the data retriever 166 downloads the segment for example, into the data store 104, and provides the requested document from the downloaded segment.

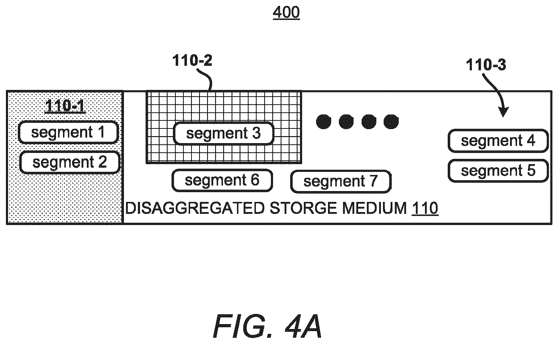

FIG. 4A shows a block diagram 400 of the disaggregated storage medium 110 that allows the scale-up of computing resources as required in accordance with an embodiment of the present disclosure. The disaggregated storage medium 110 can provide multiple logical views, e.g., 110-1, 110-2, 110-3, for different physical partitions so that physical data is unaffected by the compute provisioned. While certain views, e.g., 110-1 and 110-2 provide for exclusive views to corresponding VMs, certain views, e.g., 110-3 can be accessed commonly by multiple VMs. The processes of assigning views to de-couple computing resources from storage as implemented by the compute optimizer 168 are described below.

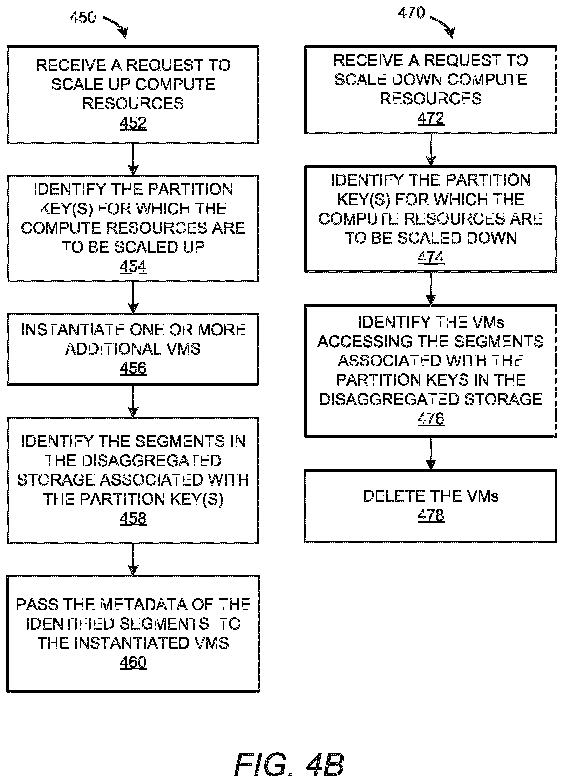

FIG. 4B shows flowcharts of two methods 450 and 470 enabled by de-coupling the compute resources from storage as implemented by the cloud platform 150 including a tiered storage in accordance with embodiments of the present disclosure. The requests to scale up or scale down the compute resources can be indirectly generated by a user. The number of additional RUs depends on the partitions. For example, to support X number of RUs, Y number of partitions may be required. The compute optimizer 168 translates the increase in the number of RUs to a scale up of partitions as detailed *infra.* The method 450 of scaling up compute resources or configuring additional RUs begins at 452. The processor 102 executes instructions of the compute optimizer 168 to receive a request for allocation of additional Request Units (RUs) for at least a portion of the cold data at 452. In an example, the request identifies a particular partition for which compute resources or RUs are to be scaled up. At 454, the compute optimizer 168 identifies the partition key(s) or documents for which the compute resources are to be scaled for example, from the request. The processor 102 via the compute optimizer 168 instantiates one or more new, additional VMs at 456 in response to the request for allocation of the additional RUs. The compute optimizer 168 identifies a subset of the segments in the disaggregated storage associated with the partition key(s) at 458. The compute optimizer 168 passes the metadata of the identified segments such as storage location addresses within the disaggregated storage medium 110 to the instantiated VMs at 460. Hence, the additional VMs are able to "view" the segments so that the documents of the segments can be accessed for point reads. Thus, compute resources are dissociated from the storage so that the storage location addresses can be passed to the scaled-up compute resources without having to copy or move the data. Some of the VMs can have exclusive views of different segments or multiple VMs can commonly view some segments.

The method 470 of scaling down the compute resources or removing RUs begins at 472. The processor 102 executes instructions of the compute optimizer 168 to receive a request to scale down compute resources associated with a particular partition identified in the request. At 474, the compute optimizer 168 identifies the partition key(s) for which the compute resources are to be scaled down, for example, from the request. The processor 102, via the compute optimizer 168 identifies the VMs accessing the segments associated with the partitions at 476. The compute optimizer 168 deletes the VMs identified at 478. Thus, the compute resources are decoupled from the storage so that the compute resources can be scaled up or scaled down while keeping the cold data unchanged.

Various manners in which the processor 102 of the apparatus 100 operates are discussed in greater detail with respect to the methods 250, 270, 300, 450, and 470 respectively depicted in Figs 2B, 2C, 3 and 4B. It should be understood that these processes may include additional operations and that some of the operations described therein may be removed and/or modified without departing from the scope.

In some examples, some or all of the operations set forth in the methods 250, 270, 300, 450, and 470 are included as utilities, programs, or subprograms, in any desired computer accessible medium. In some examples, the methods 250, 270, 300, 450, and 470 are embodied by computer programs, which may exist in a variety of forms both active and inactive. For example, the computer programs exist as machine-readable instructions, including source code, object code, executable code or other formats. Any of the above, in some examples, are embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions, and figures used herein are set forth by way of illustration only and are not meant as limitations. Many variations are possible within the scope of the disclosure, which is intended to be defined by the following claims - - and their equivalents -- in which all terms are meant in their broadest reasonable sense unless otherwise indicated.

## Claims

1. An apparatus, comprising
a processor; and
a memory on which are stored machine-readable instructions that when executed by the processor, cause the processor to:
store, as cold data in a disaggregated storage medium (110), immutable segments from Virtual Machines, VMs, (120) wherein the immutable segments include documents from partitions that are **characterized by** corresponding partition keys;
format the cold data into sorted runs, wherein a sorted run includes at least one of the immutable segments that is arranged in non-overlapping search key ranges and wherein search keys correspond to the documents and a search key of a document includes corresponding partition key and a documentID of the document;
assign the sorted runs to corresponding levels of multiple levels based on timestamps of the sorted runs; and
generate metadata maps (142) that store metadata identifying the immutable segments and the sorted runs including the immutable segments.

2. The apparatus of claim 1, wherein the machine-readable instructions further cause the processor to:
enable searching for corresponding documents in the cold data via the search keys.

3. The apparatus of claim 2, wherein to enable searching for corresponding documents in the cold data via the search keys, the machine-readable instructions further cause the processor to:
receive a search key associated with a document of the corresponding documents to be retrieved from the disaggregated storage medium (110), wherein the received search key includes one or more of a partition key and a document ID.

4. The apparatus of claim 3, wherein to enable searching for corresponding documents in the cold data via the search keys, the machine-readable instructions further cause the processor to:
identify a corresponding level of the multiple levels and a sorted run in the disaggregated storage medium (110) with a search key range including the received search key when the received search key includes the partition key and the document ID.

5. The apparatus of claim 4, wherein the machine-readable instructions further cause the processor to:
retrieve the document based on a bloom filter output that determines that the received search key is present in a segment of the sorted run in the corresponding level.

6. The apparatus of claim 3, wherein to enable searching for corresponding documents in the cold data via the search keys, the machine-readable instructions further cause the processor to:
output documents retrieved from a corresponding partition based on the search key including only a partition key.

7. The apparatus of one of claims 1 to 6, wherein the machine-readable instructions further cause the processor to:
receive a request for allocation of additional Request Units for at least a portion of the cold data;
instantiate an additional VM in response to receipt of the request for allocation of additional Request Units for at least a portion of the cold data; and
enable the additional instantiated VM to access the at least a portion of the cold data by passing metadata of a subset of the immutable segments in the at least a portion of the cold data.

8. The apparatus of claim 7, wherein to allocate the additional Request Units for at least the portion of the cold data, the machine-readable instructions further cause the processor to:
identify the sorted runs that include a subset of the immutable segments from the portion of the cold data.

9. The apparatus of claim 8, wherein to allocate the additional Request Units for at least the portion of the cold data the machine-readable instructions further cause the processor to: provide access to the identified sorted runs to the additional VM.

10. A computer-readable medium on which is stored a plurality of instructions that when executed by a processor, cause the processor to:
store, as cold data in a disaggregated storage medium (110), immutable segments from Virtual Machines, VMs, (120) wherein the immutable segments include documents from partitions that are **characterized by** corresponding partition keys;
format the cold data into sorted runs, wherein a sorted run includes at least one of the immutable segments that is arranged in non-overlapping search key ranges and wherein search keys correspond to the documents and a search key of a document includes corresponding partition key and a documentID of the document;
assign the sorted runs to corresponding levels of multiple levels based on timestamps of the sorted runs; and
generate metadata maps (142) that store metadata identifying the immutable segments and the sorted runs including the immutable segments.

11. The computer-readable medium of claim 10, wherein to generate the immutable segment, the instructions further cause the processor to:
receive data including documents from partitions **characterized by** corresponding partition keys;
store the documents as hot data in a memtable in a local storage medium of a corresponding Virtual Machine, VM;
generate the immutable segment from the memtable based on the memtable attaining a threshold size;
flush the immutable segment as cold data on a disaggregated storage medium (110) shared by a plurality of VMs (120) including the VM hosted on a cloud platform; and
delete the hot data from the local storage medium of the corresponding VM based on the hot data fulfilling a time-to-cold, TTC, criterion; and optionally
seal the memtable based on the memtable attaining the threshold size; and
populate subsequently received documents into a new memtable.

12. The computer-readable medium of claim 11, wherein to generate the immutable segment, the instructions further cause the processor to:
index the immutable segment with the partition key and a document identifier corresponding to the document.

13. The computer-readable medium of one of claims 11 to 12, at least one of:
wherein the TTC criterion includes one or more of a temporal criterion in which the hot data is to be deleted after a preconfigured time or an access criterion in which the hot data is to be deleted based on the hot data not being accessed within a preconfigured time;
wherein the immutable segment is a .avro file;
wherein the local storage medium is a solid-state drive, SSD, of a computer interacting with the VM; and
wherein the hot data satisfies certain Service Level Agreement, SLA, criteria and the cold data does not comply with the certain SLA criteria.

14. A processor-executable method comprising:
storing by a processor, as cold data in a disaggregated storage medium (110), immutable segments from Virtual Machines, VMs, (120) wherein the immutable segments include documents from partitions that are **characterized by** corresponding partition keys;
formatting, by the processor, the cold data into sorted runs, wherein a sorted run includes at least one of the immutable segments that is arranged in non-overlapping search key ranges and wherein search keys correspond to the documents and a search key of a document includes corresponding partition key and a documentID of the document;
assigning, by the processor, the sorted runs to corresponding levels of multiple levels based on timestamps of the sorted runs; and
generating, by the processor, metadata maps (142) that store metadata identifying the immutable segments and the sorted runs including the immutable segments.

15. The method of claim 14, further comprising the following steps:
receiving, by the processor, a scale-up request for allocation of additional Request Units for a first portion of cold data stored on a disaggregated storage medium (110);
instantiating, by the processor, an additional virtual machine, VM, in response to a request for allocation of additional Request Units; and
enabling, by the processor, the additional VM to access the first portion of the cold data by passing metadata including addresses of segments in the first portion of the cold data;
and optionally at least one of:
wherein the additional VM is enabled for point reads of documents in the cold data;
further comprising:
receiving, by the processor, a scale-down request for a second portion of the cold data; and
deleting, by the processor, a VM accessing the second portion while keeping the cold data unchanged; and
wherein enabling the additional VM to access the first portion further comprises:
enabling, by the processor, the additional VM to access the first portion of the cold data while keeping the cold data unchanged.

## Patentansprüche

1. Vorrichtung, umfassend
einen Prozessor; und
einen Speicher, auf dem maschinenlesbare Anweisungen gespeichert sind, die bei Ausführung durch den Prozessor den Prozessor veranlassen zum:
Speichern unveränderlicher Segmente von virtuellen Maschinen, VMs, (120) als kalte Daten in einem disaggregierten Speichermedium (110), wobei die unveränderlichen Segmente Dokumente aus Partitionen enthalten, die durch entsprechende Partitionsschlüssel gekennzeichnet sind;
Formatieren der kalten Daten zu sortierten Läufen, wobei ein sortierter Lauf wenigstens eines der unveränderlichen Segmente enthält, das in nicht überlappenden Suchschlüsselbereichen angeordnet ist, und wobei Suchschlüssel den Dokumenten entsprechen und ein Suchschlüssel eines Dokuments entsprechenden Partitionsschlüssel und eine Dokument-ID des Dokuments enthält;
Zuweisen der sortierten Läufe zu entsprechenden Ebenen mehrerer Ebenen auf Grundlage von Zeitstempeln der sortierten Läufe; und
Erzeugen von Metadatenzuordnungen (142), die Metadaten speichern, welche die unveränderlichen Segmente und die sortierten Läufe, welche die unveränderlichen Segmente enthalten, identifizieren.

2. Vorrichtung nach Anspruch 1, wobei die maschinenlesbaren Anweisungen den Prozessor ferner veranlassen zum:
Ermöglichen einer Suche nach entsprechenden Dokumenten in den kalten Daten über die Suchschlüssel.

3. Vorrichtung nach Anspruch 2, wobei die maschinenlesbaren Anweisungen den Prozessor zum Ermöglichen einer Suche nach entsprechenden Dokumenten in den kalten Daten über die Suchschlüssel ferner veranlassen zum:
Empfangen eines Suchschlüssels, der einem aus dem disaggregierten Speichermedium (110) abzurufenden Dokument der entsprechenden Dokumente zugeordnet ist, wobei der empfangene Suchschlüssel eines oder mehrere von einem Partitionsschlüssel und einer Dokument-ID enthält.

4. Vorrichtung nach Anspruch 3, wobei die maschinenlesbaren Anweisungen den Prozessor zum Ermöglichen einer Suche nach entsprechenden Dokumenten in den kalten Daten über die Suchschlüssel ferner veranlassen zum:
Identifizieren einer entsprechenden Ebene der mehreren Ebenen und eines sortierten Laufs in dem disaggregierten Speichermedium (110) mit einem Suchschlüsselbereich, der den empfangenen Suchschlüssel enthält, wenn der empfangene Suchschlüssel den Partitionsschlüssel und die Dokument-ID enthält.

5. Vorrichtung nach Anspruch 4, wobei die maschinenlesbaren Anweisungen den Prozessor ferner veranlassen zum:
Abrufen des Dokuments auf Grundlage einer Bloom-Filter-Ausgabe, die bestimmt, dass der empfangene Suchschlüssel in einem Segment des sortierten Laufs in der entsprechenden Ebene vorhanden ist.

6. Vorrichtung nach Anspruch 3, wobei die maschinenlesbaren Anweisungen den Prozessor zum Ermöglichen einer Suche nach entsprechenden Dokumenten in den kalten Daten über die Suchschlüssel ferner veranlassen zum:
Ausgeben von Dokumenten, die aus einer entsprechenden Partition abgerufen werden, auf Grundlage des Suchschlüssels, der nur einen Partitionsschlüssel enthält.

7. Vorrichtung nach einem der Ansprüche 1 bis 6, wobei die maschinenlesbaren Anweisungen den Prozessor ferner veranlassen zum:
Empfangen einer Anforderung zur Zuweisung zusätzlicher Anforderungseinheiten für wenigstens einen Teil der kalten Daten;
Instanziieren einer zusätzlichen VM als Reaktion auf den Empfang der Anforderung zur Zuweisung zusätzlicher Anforderungseinheiten für wenigstens einen Teil der kalten Daten; und
Ermöglichen eines Zugriffs der zusätzlich instanziierten VM auf den wenigstens einen Teil der kalten Daten durch Übergeben von Metadaten einer Teilmenge der unveränderlichen Segmente in dem wenigstens einen Teil der kalten Daten.

8. Vorrichtung nach Anspruch 7, wobei die maschinenlesbaren Anweisungen den Prozessor zum Zuweisen der zusätzlichen Anforderungseinheiten für wenigstens den Teil der kalten Daten ferner veranlassen zum:
Identifizieren der sortierten Läufe, die eine Teilmenge der unveränderlichen Segmente aus dem Teil der kalten Daten enthalten.

9. Vorrichtung nach Anspruch 8, wobei die maschinenlesbaren Anweisungen den Prozessor zum Zuweisen der zusätzlichen Anforderungseinheiten für wenigstens den Teil der kalten Daten ferner veranlassen zum:
Bereitstellen eines Zugriffs auf die identifizierten sortierten Läufe für die zusätzliche VM.

10. Computerlesbares Medium, auf dem eine Vielzahl von Anweisungen gespeichert ist, die bei Ausführung durch einen Prozessor den Prozessor veranlassen zum:
Speichern unveränderlicher Segmente von virtuellen Maschinen, VMs, (120) als kalte Daten in einem disaggregierten Speichermedium (110), wobei die unveränderlichen Segmente Dokumente aus Partitionen enthalten, die durch entsprechende Partitionsschlüssel gekennzeichnet sind;
Formatieren der kalten Daten zu sortierten Läufen, wobei ein sortierter Lauf wenigstens eines der unveränderlichen Segmente enthält, das in nicht überlappenden Suchschlüsselbereichen angeordnet ist, und wobei Suchschlüssel den Dokumenten entsprechen und ein Suchschlüssel eines Dokuments entsprechenden Partitionsschlüssel und eine Dokument-ID des Dokuments enthält;
Zuweisen der sortierten Läufe zu entsprechenden Ebenen mehrerer Ebenen auf Grundlage von Zeitstempeln der sortierten Läufe; und
Erzeugen von Metadatenzuordnungen (142), die Metadaten speichern, welche die unveränderlichen Segmente und die sortierten Läufe, welche die unveränderlichen Segmente enthalten, identifizieren.

11. Computerlesbares Medium nach Anspruch 10, wobei die Anweisungen den Prozessor zum Erzeugen des unveränderlichen Segments ferner veranlassen zum:
Empfangen von Daten, die Dokumente aus Partitionen enthalten, die durch entsprechende Partitionsschlüssel gekennzeichnet sind;
Speichern der Dokumente als heiße Daten in einer Memtable in einem lokalen Speichermedium einer entsprechenden virtuellen Maschine, VM;
Erzeugen des unveränderlichen Segments aus der Memtable auf Grundlage dessen, dass die Memtable eine Schwellenwertgröße erreicht;
Ausschreiben des unveränderlichen Segments als kalte Daten auf ein disaggregiertes Speichermedium (110), das von einer Vielzahl von VMs (120) einschließlich der auf einer Cloud-Plattform gehosteten VM gemeinsam genutzt wird; und
Löschen der heißen Daten aus dem lokalen Speichermedium der entsprechenden VM auf Grundlage dessen, dass die heißen Daten ein Time-to-Cold-Kriterium, TTC-Kriterium, erfüllen; und optional
Versiegeln der Memtable auf Grundlage dessen, dass die Memtable die Schwellenwertgröße erreicht; und
Eintragen anschließend empfangener Dokumente in eine neue Memtable.

12. Computerlesbares Medium nach Anspruch 11, wobei die Anweisungen den Prozessor zum Erzeugen des unveränderlichen Segments ferner veranlassen zum:
Indexieren des unveränderlichen Segments mit dem Partitionsschlüssel und einer dem Dokument entsprechenden Dokumentkennung.

13. Computerlesbares Medium nach einem der Ansprüche 11 bis 12, wobei wenigstens eines der Folgenden gilt:
wobei das TTC-Kriterium eines oder mehrere von einem zeitlichen Kriterium, bei dem die heißen Daten nach einer vorkonfigurierten Zeit zu löschen sind, oder einem Zugriffskriterium enthält, bei dem die heißen Daten auf Grundlage dessen zu löschen sind, dass innerhalb einer vorkonfigurierten Zeit nicht auf die heißen Daten zugegriffen wird;
wobei das unveränderliche Segment eine .avro-Datei ist;
wobei das lokale Speichermedium ein Solid-State-Laufwerk, SSD, eines mit der VM interagierenden Computers ist; und
wobei die heißen Daten bestimmte Kriterien einer Dienstgütevereinbarung, SLA, erfüllen und die kalten Daten die bestimmten SLA-Kriterien nicht einhalten.

14. Durch einen Prozessor ausführbares Verfahren, umfassend:
Speichern, durch einen Prozessor, unveränderlicher Segmente von virtuellen Maschinen, VMs, (120) als kalte Daten in einem disaggregierten Speichermedium (110), wobei die unveränderlichen Segmente Dokumente aus Partitionen enthalten, die durch entsprechende Partitionsschlüssel gekennzeichnet sind;
Formatieren, durch den Prozessor, der kalten Daten zu sortierten Läufen, wobei ein sortierter Lauf wenigstens eines der unveränderlichen Segmente enthält, das in nicht überlappenden Suchschlüsselbereichen angeordnet ist, und wobei Suchschlüssel den Dokumenten entsprechen und ein Suchschlüssel eines Dokuments entsprechenden Partitionsschlüssel und eine Dokument-ID des Dokuments enthält;
Zuweisen, durch den Prozessor, der sortierten Läufe zu entsprechenden Ebenen mehrerer Ebenen auf Grundlage von Zeitstempeln der sortierten Läufe; und
Erzeugen, durch den Prozessor, von Metadatenzuordnungen (142), die Metadaten speichern, welche die unveränderlichen Segmente und die sortierten Läufe, welche die unveränderlichen Segmente enthalten, identifizieren.

15. Verfahren nach Anspruch 14, ferner umfassend die folgenden Schritte:
Empfangen, durch den Prozessor, einer Hochskalierungsanforderung zur Zuweisung zusätzlicher Anforderungseinheiten für einen ersten Teil kalter Daten, die auf einem disaggregierten Speichermedium (110) gespeichert sind;
Instanziieren, durch den Prozessor, einer zusätzlichen virtuellen Maschine, VM, als Reaktion auf eine Anforderung zur Zuweisung zusätzlicher Anforderungseinheiten; und
Ermöglichen, durch den Prozessor, eines Zugriffs der zusätzlichen VM auf den ersten Teil der kalten Daten durch Übergeben von Metadaten, die Adressen von Segmenten in dem ersten Teil der kalten Daten enthalten;
und optional wenigstens eines der Folgenden:
wobei die zusätzliche VM für Punktlesezugriffe auf Dokumente in den kalten Daten befähigt wird;
ferner umfassend:
Empfangen, durch den Prozessor, einer Herunterskalierungsanforderung für einen zweiten Teil der kalten Daten; und
Löschen, durch den Prozessor, einer auf den zweiten Teil zugreifenden VM unter unverändertem Beibehalten der kalten Daten; und
wobei das Ermöglichen eines Zugriffs der zusätzlichen VM auf den ersten Teil ferner umfasst:
Ermöglichen, durch den Prozessor, eines Zugriffs der zusätzlichen VM auf den ersten Teil der kalten Daten unter unverändertem Beibehalten der kalten Daten.

## Revendications

1. Dispositif comprenant
un processeur ; et
une mémoire sur laquelle sont stockées des instructions lisibles par machine qui, lorsqu'elles sont exécutées par le processeur, amènent le processeur à :
stocker, en tant que données froides dans un support de stockage désagrégé (110), des segments immuables provenant de machines virtuelles, VM, (120), dans lequel les segments immuables comprennent des documents provenant de partitions qui sont **caractérisées par** des clés de partition correspondantes ;
formater les données froides en séquences triées, dans lequel une séquence triée comprend au moins un des segments immuables qui est agencé en plages de clés de recherche sans chevauchement et dans lequel des clés de recherche correspondent aux documents et une clé de recherche d'un document comprend une clé de partition correspondante et un identifiant de document du document ;
attribuer les séquences triées à des niveaux correspondants de multiples niveaux sur la base d'horodatages des séquences triées ; et
générer des tables de correspondance de métadonnées (142) qui stockent des métadonnées identifiant les segments immuables et les séquences triées comprenant les segments immuables.

2. Dispositif selon la revendication 1, dans lequel les instructions lisibles par machine amènent en outre le processeur à :
permettre la recherche de documents correspondants dans les données froides au moyen des clés de recherche.

3. Dispositif selon la revendication 2, dans lequel, pour permettre la recherche de documents correspondants dans les données froides au moyen des clés de recherche, les instructions lisibles par machine amènent en outre le processeur à :
recevoir une clé de recherche associée à un document des documents correspondants à récupérer à partir du support de stockage désagrégé (110), dans lequel la clé de recherche reçue comprend un ou plusieurs parmi une clé de partition et un identifiant de document.

4. Dispositif selon la revendication 3, dans lequel, pour permettre la recherche de documents correspondants dans les données froides au moyen des clés de recherche, les instructions lisibles par machine amènent en outre le processeur à :
identifier un niveau correspondant des multiples niveaux et une séquence triée dans le support de stockage désagrégé (110) présentant une plage de clés de recherche comprenant la clé de recherche reçue lorsque la clé de recherche reçue comprend la clé de partition et l'identifiant de document.

5. Dispositif selon la revendication 4, dans lequel les instructions lisibles par machine amènent en outre le processeur à :
récupérer le document sur la base d'une sortie de filtre de Bloom qui détermine que la clé de recherche reçue est présente dans un segment de la séquence triée dans le niveau correspondant.

6. Dispositif selon la revendication 3, dans lequel, pour permettre la recherche de documents correspondants dans les données froides au moyen des clés de recherche, les instructions lisibles par machine amènent en outre le processeur à :
fournir en sortie des documents récupérés à partir d'une partition correspondante sur la base de la clé de recherche comprenant uniquement une clé de partition.

7. Dispositif selon l'une des revendications 1 à 6, dans lequel les instructions lisibles par machine amènent en outre le processeur à :
recevoir une demande d'attribution d'unités de requête supplémentaires pour au moins une partie des données froides ;
instancier une VM supplémentaire en réponse à la réception de la demande d'attribution d'unités de requête supplémentaires pour au moins une partie des données froides ; et
permettre à la VM supplémentaire instanciée d'accéder à ladite au moins une partie des données froides en transmettant des métadonnées d'un sous-ensemble des segments immuables dans ladite au moins une partie des données froides.

8. Dispositif selon la revendication 7, dans lequel, pour attribuer les unités de requête supplémentaires pour au moins la partie des données froides, les instructions lisibles par machine amènent en outre le processeur à :
identifier les séquences triées qui comprennent un sous-ensemble des segments immuables provenant de la partie des données froides.

9. Dispositif selon la revendication 8, dans lequel, pour attribuer les unités de requête supplémentaires pour au moins la partie des données froides, les instructions lisibles par machine amènent en outre le processeur à :
fournir à la VM supplémentaire un accès aux séquences triées identifiées.

10. Support lisible par ordinateur sur lequel est stockée une pluralité d'instructions qui, lorsqu'elles sont exécutées par un processeur, amènent le processeur à :
stocker, en tant que données froides dans un support de stockage désagrégé (110), des segments immuables provenant de machines virtuelles, VM, (120), dans lequel les segments immuables comprennent des documents provenant de partitions qui sont **caractérisées par** des clés de partition correspondantes ;
formater les données froides en séquences triées, dans lequel une séquence triée comprend au moins un des segments immuables qui est agencé en plages de clés de recherche sans chevauchement et dans lequel des clés de recherche correspondent aux documents et une clé de recherche d'un document comprend une clé de partition correspondante et un identifiant de document du document ;
attribuer les séquences triées à des niveaux correspondants de multiples niveaux sur la base d'horodatages des séquences triées ; et
générer des tables de correspondance de métadonnées (142) qui stockent des métadonnées identifiant les segments immuables et les séquences triées comprenant les segments immuables.

11. Support lisible par ordinateur selon la revendication 10, dans lequel, pour générer le segment immuable, les instructions amènent en outre le processeur à :
recevoir des données comprenant des documents provenant de partitions **caractérisées par** des clés de partition correspondantes ;
stocker les documents en tant que données chaudes dans une memtable dans un support de stockage local d'une machine virtuelle, VM, correspondante ;
générer le segment immuable à partir de la memtable sur la base du fait que la memtable atteint une taille seuil ;
vider le segment immuable en tant que données froides sur un support de stockage désagrégé (110) partagé par une pluralité de VM (120) comprenant la VM hébergée sur une plateforme en nuage ; et
supprimer les données chaudes du support de stockage local de la VM correspondante sur la base du fait que les données chaudes satisfont à un critère de délai de passage à froid, TTC ; et facultativement
sceller la memtable sur la base du fait que la memtable atteint la taille seuil ; et
insérer des documents reçus ultérieurement dans une nouvelle memtable.

12. Support lisible par ordinateur selon la revendication 11, dans lequel, pour générer le segment immuable, les instructions amènent en outre le processeur à :
indexer le segment immuable avec la clé de partition et un identifiant de document correspondant au document.

13. Support lisible par ordinateur selon l'une des revendications 11 à 12, au moins un des éléments suivants :
dans lequel le critère TTC comprend un ou plusieurs parmi un critère temporel selon lequel les données chaudes doivent être supprimées après une durée préconfigurée ou un critère d'accès selon lequel les données chaudes doivent être supprimées sur la base du fait qu'aucun accès aux données chaudes n'a lieu pendant une durée préconfigurée ;
dans lequel le segment immuable est un fichier .avro ;
dans lequel le support de stockage local est un disque à semi-conducteurs, SSD, d'un ordinateur interagissant avec la VM ; et
dans lequel les données chaudes satisfont à certains critères d'accord de niveau de service, SLA, et les données froides ne respectent pas lesdits certains critères SLA.

14. Procédé exécutable par un processeur comprenant :
le stockage, par un processeur, en tant que données froides dans un support de stockage désagrégé (110), de segments immuables provenant de machines virtuelles, VM, (120), dans lequel les segments immuables comprennent des documents provenant de partitions qui sont **caractérisées par** des clés de partition correspondantes ;
le formatage, par le processeur, des données froides en séquences triées, dans lequel une séquence triée comprend au moins un des segments immuables qui est agencé en plages de clés de recherche sans chevauchement et dans lequel des clés de recherche correspondent aux documents et une clé de recherche d'un document comprend une clé de partition correspondante et un identifiant de document du document ;
l'attribution, par le processeur, des séquences triées à des niveaux correspondants de multiples niveaux sur la base d'horodatages des séquences triées ; et
la génération, par le processeur, de tables de correspondance de métadonnées (142) qui stockent des métadonnées identifiant les segments immuables et les séquences triées comprenant les segments immuables.

15. Procédé selon la revendication 14, comprenant en outre les étapes suivantes :
la réception, par le processeur, d'une demande de mise à l'échelle à la hausse pour l'attribution d'unités de requête supplémentaires pour une première partie de données froides stockées sur un support de stockage désagrégé (110) ;
l'instanciation, par le processeur, d'une machine virtuelle, VM, supplémentaire en réponse à une demande d'attribution d'unités de requête supplémentaires ; et
le fait de permettre, par le processeur, à la VM supplémentaire d'accéder à la première partie des données froides en transmettant des métadonnées comprenant des adresses de segments dans la première partie des données froides ;
et facultativement au moins un des éléments suivants :
dans lequel la VM supplémentaire est rendue apte à effectuer des lectures ponctuelles de documents dans les données froides ;
comprenant en outre :
la réception, par le processeur, d'une demande de mise à l'échelle à la baisse pour une deuxième partie des données froides ; et
la suppression, par le processeur, d'une VM accédant à la deuxième partie tout en maintenant les données froides inchangées ; et
dans lequel le fait de permettre à la VM supplémentaire d'accéder à la première partie comprend en outre :
le fait de permettre, par le processeur, à la VM supplémentaire d'accéder à la première partie des données froides tout en maintenant les données froides inchangées.
